# DEMANDE DE BREVET EUROPEEN

(11) **EP 2 546 737 A1**
(43) Date de publication de la demande: **16.01.2013**
(21) Numéro de dépôt: 12170246.8
(22) Date de dépôt: 31.05.2012
(51) Int. Cl.: G06F 7/72

(54) **Protection d'un calcul d'exponentiation modulaire par addition d'une quantité aléatoire**

(30) Priorité: 13.07.2011 FR 1156371
(71) Demandeur: STMicroelectronics (Rousset) SAS, 13790 Rousset (FR)
(72) Inventeur: Teglia, Yannick, 13720 Belcodene (FR)
(74) Mandataire: de Beaumont, Michel

(57) **Abrégé**

L'invention concerne un procédé de protection d'un calcul, par un circuit électronique, d'une exponentiation modulaire d'une quantité numérique (M) dans lequel: une première variable (T) est initialisée (34) avec une quantité aléatoire (r) majorée de l'unité ; une deuxième variable (U) est initialisée (33) avec le produit de ladite quantité numérique par ladite quantité aléatoire ; une troisième variable (M) est initialisée (21) avec ladite quantité numérique ; itérativement pour tous les bits (hᵢ) valant 1 d'un exposant (h) de l'exponentiation modulaire, la première variable est mise à jour en : a) multipliant (54) son contenu par celui de la troisième variable ; et b) lui soustrayant (36) le contenu de la deuxième variable majoré de la quantité aléatoire ; et une fois tous les bits de l'exposant traités, le contenu de la première variable est minoré (38) de la quantité aléatoire pour fournir (39) le résultat de l'exponentiation modulaire.

## Description

### Domaine de l'invention

La présente invention concerne de façon générale les circuits électroniques et, plus particulièrement, les circuits exécutant, de façon matérielle ou logicielle, des algorithmes de signature ou de chiffrement mettant en oeuvre des exponentiations modulaires ou des produits sur courbes elliptiques. Des exponentiations modulaires sont mises en oeuvre, par exemple, par des algorithmes de type RSA et des opérations sur courbes elliptiques se retrouvent, par exemple, dans la cryptographie à clé publique.

L'invention s'applique plus particulièrement à la protection d'informations manipulées par ces calculs contre des attaques par canaux cachés.

### Exposé de l'art antérieur

Pour protéger des informations (typiquement des quantités secrètes) manipulées par des calculs d'exponentiation modulaire ou sur courbes elliptiques contre des attaques par canaux cachés, par exemple des attaques de type DPA (Differential Power Analysis), on utilise généralement des nombres aléatoires pour masquer les quantités manipulées par l'algorithme.

On protège efficacement le calcul en masquant le message (la donnée) ou le point de la courbe à soumettre au calcul pour que son opération avec la quantité secrète soit protégée.

Toutefois, en fin de calcul, il est nécessaire de démasquer le résultat, c'est-à-dire de supprimer la contribution de la quantité aléatoire sur ce résultat (message chiffré, signature, etc.), faute de quoi le résultat est inexploitable.

Dans les circuits usuels, le démasquage coûte cher en ressources du circuit (énergie, temps de calcul, etc.).

Le document WO 2007/000702 décrit un procédé de protection d'un calcul d'exponentiation modulaire exploitant la représentation de Montgomery.

### Résumé

Un objet d'un mode de réalisation de la présente invention est de pallier tout ou partie des inconvénients des solutions usuelles de protection de calculs d'exponentiation modulaire ou sur courbes elliptiques.

Un autre objet d'un mode de réalisation de la présente invention est de réduire les ressources nécessaires au calcul, démasquage inclus.

Un autre objet d'un mode de réalisation de la présente invention selon un premier aspect est de proposer une solution plus particulièrement destinée aux calculs d'exponentiations modulaires.

Selon ce premier aspect, un autre objet d'un mode de réalisation de la présente invention est de proposer une solution particulièrement adaptée aux algorithmes de type RSA.

Un autre objet d'un mode de réalisation de la présente invention selon un deuxième aspect est de proposer une solution plus particulièrement destinée aux calculs sur courbes elliptiques.

Selon ce deuxième aspect, un autre objet d'un mode de réalisation de la présente invention est de proposer une solution particulièrement adaptée à la cryptographie asymétrique utilisant des courbes elliptiques.

Pour atteindre tout ou partie de ces objets ainsi que d'autres, on prévoit un procédé de protection d'un calcul, par un circuit électronique, d'une exponentiation modulaire d'une quantité numérique dans lequel :
une première variable est initialisée avec une quantité aléatoire majorée de l'unité ;
une deuxième variable est initialisée avec le produit de ladite quantité numérique par ladite quantité aléatoire ;
une troisième variable est initialisée avec ladite quantité numérique ;
itérativement pour tous les bits valant 1 d'un exposant de l'exponentiation modulaire, la première variable est mise à jour en :
   a) multipliant son contenu par celui de la troisième variable ; et
   b) lui soustrayant le contenu de la deuxième variable majoré de la quantité aléatoire,
une fois tous les bits de l'exposant traités, le contenu de la première variable est minoré de la quantité aléatoire pour fournir le résultat de l'exponentiation modulaire.

Selon un mode de réalisation de la présente invention, les bits de l'exposant sont traités successivement à partir du bit de poids faible, la troisième variable contenant ladite quantité numérique.

Selon un mode de réalisation de la présente invention, pour tous les bits de l'exposant :
la première variable est mise à jour avant l'étape a) en :
   élevant son contenu au carré ; et
   lui soustrayant le contenu d'une quatrième variable initialisée avec le double du produit de la quantité aléatoire par la valeur initiale de la première variable ; et
la quatrième variable est mise à jour par le double du produit du contenu de la première variable par la quantité aléatoire.

Selon un mode de réalisation de la présente invention, les bits de l'exposant sont traités successivement à partir du bit de poids fort, la troisième variable étant initialisée avec ladite quantité numérique.

Selon un mode de réalisation de la présente invention, pour chaque bit de l'exposant et après l'étape b) :
le contenu de la troisième variable est élevé au carré ; puis
la deuxième variable est mise à jour par le produit du contenu de la troisième variable par la quantité aléatoire.

Selon un mode de réalisation de la présente invention, si le bit courant de l'exposant vaut 0, une cinquième variable est mise à jour par les opérations prévues aux étapes a) et b).

Selon un mode de réalisation de la présente invention, la quantité aléatoire est une puissance de deux.

Selon un mode de réalisation de la présente invention, ledit exposant représente une quantité secrète.

On prévoit également un procédé de cryptographie selon un algorithme RSA dans lequel chaque exponentiation modulaire est calculée par la mise en oeuvre du procédé ci-dessus.

On prévoit également un circuit électronique adapté à la mise en oeuvre du procédé ci-dessus.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un organigramme simplifié d'un exemple usuel de calcul protégé d'exponentiation modulaire ;
la figure 2 est un organigramme d'un mode de réalisation d'un calcul d'exponentiation modulaire ;
la figure 2A est un organigramme d'une variante du mode de réalisation de la figure 2 ;
la figure 2B est un organigramme d'une autre variante du mode de réalisation de la figure 2 ;
la figure 3 illustre un autre mode de réalisation d'un calcul d'exponentiation modulaire ;
la figure 3A illustre une variante du mode de réalisation de la figure 3 ;
la figure 4 est un organigramme simplifié d'un exemple usuel de calcul sur courbes elliptiques ;
la figure 5 illustre un mode de réalisation appliqué à un calcul sur courbes elliptiques ;
la figure 5A est un organigramme d'une variante du mode de réalisation de la figure 5 ; et
la figure 5B est un organigramme d'une autre variante du mode de réalisation de la figure 5.

### Description détaillée

De mêmes éléments ont été désignés par de mêmes références aux différentes figures. Par souci de clarté, seuls les éléments utiles à la compréhension des modes de réalisation décrits ont été représentés et seront détaillés. En particulier, l'origine et la destination des quantités numériques manipulées n'ont pas été détaillées, les modes de réalisation étant compatibles avec les utilisations usuelles de telles quantités numériques.

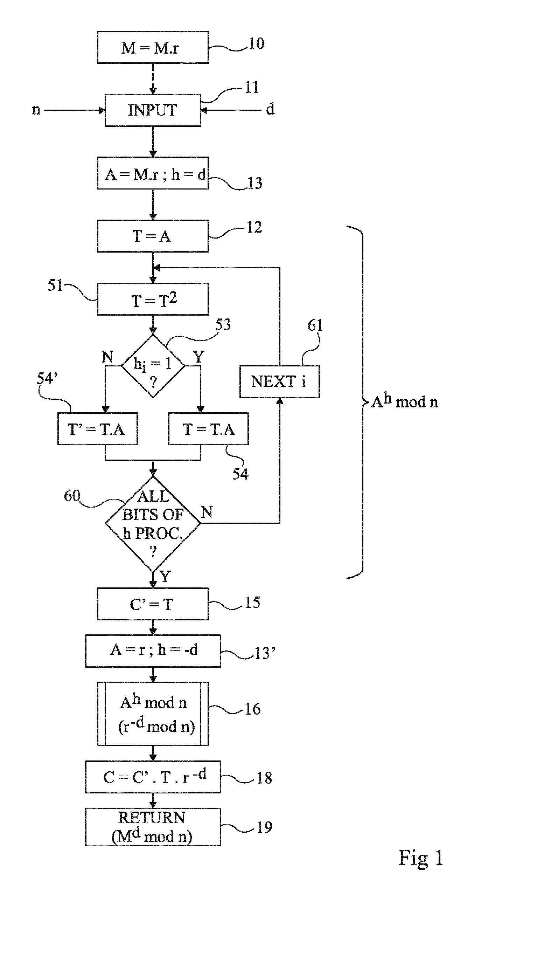

La figure 1 est un organigramme illustrant un exemple usuel de calcul d'exponentiation modulaire appliqué à un algorithme de type RSA.

On souhaite calculer une grandeur M^{d} mod n, où M représente le message ou la quantité à chiffrer ou déchiffrer, d représente la quantité secrète et n le modulo de l'opération. Dans l'algorithme RSA, ce modulo correspond à un produit de nombres premiers p et q représentant les facteurs du module de chiffrement (n = p.q). L'exposant de chiffrement d est, dans l'algorithme RSA, un entier choisi pour être premier avec l'indicatrice d'Euler ϕ(n) du module de chiffrement n. On note généralement e la clé de chiffrement et d la clé de déchiffrement. Le couple (n, e) représente la clé publique et le couple (n, d) représente la clé privée. D'autres notations peuvent bien entendu intervenir.

De façon plus générale, une exponentiation modulaire d'un message ou d'une donnée M, par un exposant d représentant une quantité secrète et modulo un nombre n, peut être utilisée dans divers algorithmes de chiffrement ou de signature (par exemple, Gamal, DSA, Diffie-Hellman).

Pour protéger les calculs et notamment la quantité secrète représentée par l'exposant lors de l'exponentiation modulaire, on effectue généralement, comme l'illustre la figure 1, un masquage du message à chiffrer par une quantité aléatoire r. Ce masquage consiste à multiplier (bloc 10, M = M.r) le message M par la quantité r.

D'habitude, ce masquage par un nombre aléatoire est effectué avant l'introduction de la quantité à traiter dans la cellule de calcul par exponentiation modulaire. Le message masqué est introduit (bloc 11, INPUT), dans la cellule de calcul, avec la quantité n représentant le modulo et la quantité d représentant l'exposant. Les opérandes de l'exponentiation modulaire sont (bloc 13, A = M.r et h = d), l'exponentiation modulaire consistant à calculer la valeur A^{h} mod n. Une variable T est initialisée avec la valeur A (bloc 12, T = A). En variante, la variable T est directement initialisée à la valeur M.r à l'étape 13.

Puis, on entre dans une boucle itérative de calcul sur tous les bits hi de l'exposant h, identifiées par un indice i. Les bits de l'exposant sont traités successivement (i allant de 0 à m-1, où m représente le nombre de bits de l'exposant).

Dans chaque itération, une première étape consiste (bloc 51, T = T²) en une élévation au carré de la variable T. Puis, on teste (bloc 53, hi = 1 ?) l'état du bit courant hi de l'exposant. Si ce bit est égal à 1 (sortie Y du bloc 53), le contenu de la variable T est mis à jour en étant multiplié par la grandeur A (bloc 54, T = T.A). Dans le cas contraire (sortie N du bloc 53), une variable inutile T' reçoit le produit T.A (bloc 54', T' = T.A). Effectuer une opération inutile lorsque le bit courant de l'exposant est à l'état 0 améliore le masquage du calcul en empêchant un attaquant de détecter l'état du bit de l'exposant par une analyse par canaux cachés. En effet, la consommation ou le rayonnement du circuit devient alors identique dans la mesure où les mêmes opérations sont effectuées. Tant que tous les bits de l'exposant h n'ont pas été traités (sortie N du bloc 60, ALL BITS OF h PROC. ?), on passe au bit suivant (bloc 61, NEXT i) de l'exposant et on revient à l'entrée de l'étape 51. Une fois que tous les bits de l'exposant ont été traités, la quantité A^{h} mod n est contenue dans la variable T. Cette quantité représente la valeur (M.r)^{d} mod n. On transfère alors ce résultat dans une variable de résultat intermédiaire C' (bloc 15, C' = T).

Puis, on effectue une deuxième exponentiation modulaire ayant pour objectif de faire disparaître la dérive introduite par la quantité aléatoire r, c'est-à-dire de démasquer le résultat. Pour cela, on place (bloc 13', A = r ; h = -d) la quantité aléatoire r (que l'on a donc préalablement mémorisé) dans la variable A, et l'opposé (-d) de la quantité d dans la variable d'exposant h. L'opposé -d correspond à une valeur arithmétiquement liée à d, telle que M^{d}.M^{-d} = M⁰ = 1. Cette valeur opposée correspond, par exemple, à une inversion un à un de l'état de chaque bit de l'exposant. Selon un autre exemple, la valeur -d a tous ses bits identiques à la valeur d, à l'exception d'un bit de signe. Un deuxième calcul d'exponentiation modulaire A^{h} mod n est alors effectué (bloc 16) sur la base de ces variables. Ce calcul revient à calculer la quantité r^{-d} mod n. Le résultat est contenu dans la variable T.

On effectue enfin un produit (bloc 18, C = C'.T.r^{-d}) de la valeur calculée précédemment (M.r)^{d} mod n par la quantité que l'on vient de calculer r^{-d} mod n. Le résultat donne l'exponentiation modulaire M^{d} mod n qui est fourni (bloc 19, RETURN C) comme résultat de calcul.

Le calcul de la figure 1 requiert en fait deux exponentiations modulaires. Une première exponentiation sert à calculer le résultat (M.r)^{d} mod n, masqué par la quantité aléatoire r, ce qui représente 2m multiplications (bloc 51, et blocs 54 ou 54', pour chaque bit de l'exposant d). Une seconde exponentiation modulaire est requise pour éliminer la contribution de la quantité aléatoire r (bloc 16). Ce calcul requiert là encore 2m multiplications. De surcroît, la quantité d est exposée à chaque calcul. A la fin du calcul, on peut soit effectuer une inversion modulaire (r^{d})⁻¹ mod n que l'on multiplie par (M.r)^{d}, soit utiliser -d pour effectuer l'opération M^{rd}.r^{-d}, et fournir le résultat.

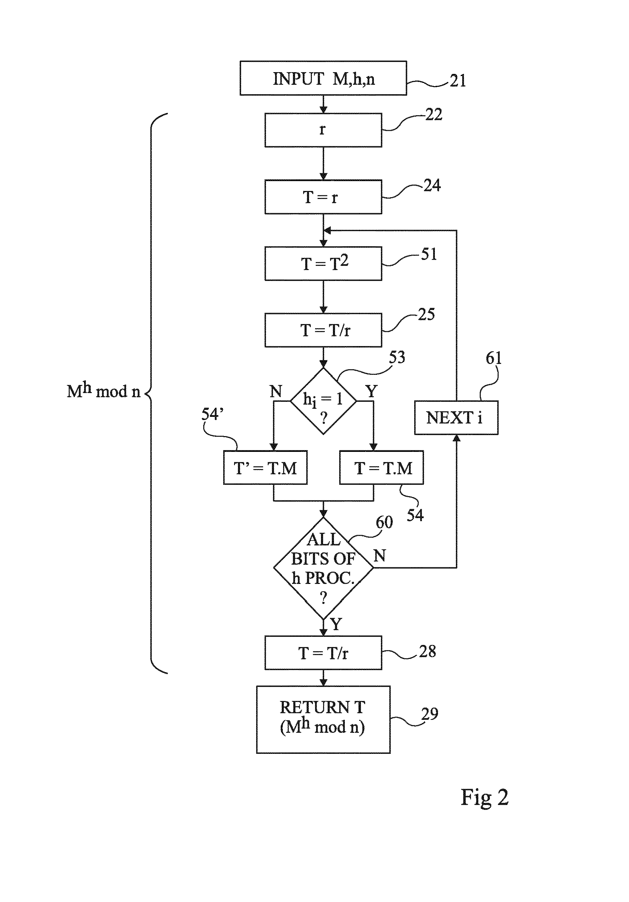

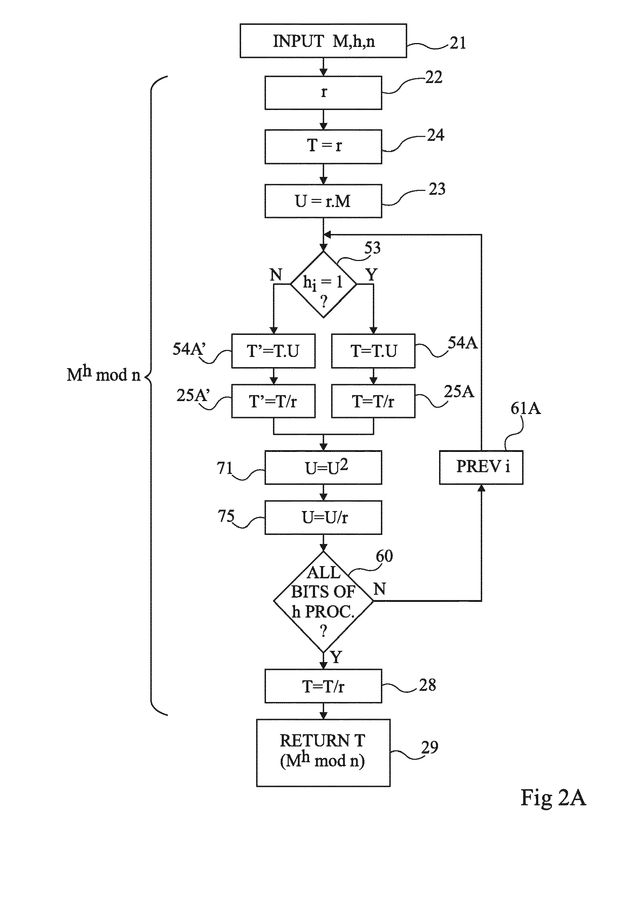

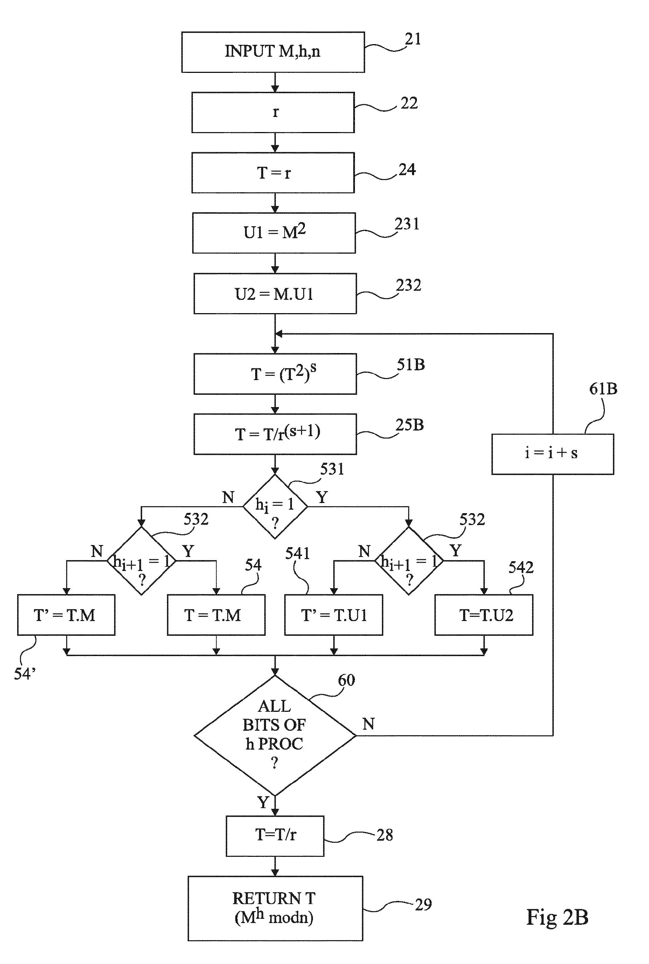

La figure 2 est un organigramme simplifié d'un mode de réalisation selon le premier aspect, d'un calcul d'exponentiation modulaire. La figure 2 illustre un calcul d'exponentiation modulaire dans lequel les bits de l'exposant sont traités de gauche à droite (du bit de poids fort vers le bit de poids faible).

Selon ce mode de réalisation, les données introduites dans la cellule de calcul (bloc 21, INPUT M, h, n) sont le message ou la donnée M à soumettre à l'exponentiation modulaire, l'exposant h de cette exponentiation modulaire et son modulo n. Par rapport à l'exemple de la figure 1, on note déjà une différence qui est que les données introduites dans la cellule de calcul ne sont pas masquées par un nombre aléatoire.

Une première étape 22, on sélectionne une valeur aléatoire r. Cette sélection est, par exemple, directement un tirage aléatoire, ou une sélection aléatoire dans une table de nombres, etc. Le nombre r n'est pas nul et est premier avec le modulo n.

Puis (bloc 24, T = r), on initialise une (arbitrairement première) variable T avec cette quantité r.

On entre ensuite dans une boucle de calcul itératif sur les bits i de l'exposant h. Une première étape 51 (T = T²) de cette boucle consiste à élever au carré le contenu de la variable T. Puis (bloc 25, T=T/r), le contenu de la variable T est divisé par la quantité aléatoire r, l'inverse (1/r) de la quantité r étant l'inverse modulo n, de préférence, pré-calculé. On effectue ensuite un test 53 (hi = 1 ?) sur la valeur du bit courant hi de l'exposant et, selon cette valeur, on multiplie (bloc 54, T = T.M) la variable T par la donnée M (nommée arbitrairement deuxième variable) ou on utilise une variable factice T' (arbitrairement troisième), qui n'est pas prise en compte dans le résultat et que l'on met à jour par le même calcul (bloc 54', T' = T.M). L'utilisation de la variable factice T', bien qu'optionnelle, est préférée. Tant que tous les bits de l'exposant h n'ont pas été traités (sortie N du bloc 60, ALL BITS OF h PROC. ?), on passe au bit suivant (bloc 61, NEXT i) et on revient en entrée du bloc 51. Une fois que tous les bits de l'exposant ont été traités, on effectue une dernière division de la variable T par la quantité aléatoire r (bloc 28, T = T/r). La variable T contient alors le résultat M^{h} mod n et ce résultat est retourné comme valeur de l'exponentiation modulaire (bloc 29, RETURN T).

Le fait de faire intervenir la quantité aléatoire dans la boucle d'exponentiation modulaire permet de borner la dérive liée à l'intervention de la quantité aléatoire à chaque tour. Dans l'exemple de la figure 1, à chaque tour la dérive introduite par le nombre aléatoire croît jusqu'à atteindre une puissance h de cette dérive, ce qui nécessite la deuxième exponentiation modulaire de démasquage. Or, pour l'efficacité de la protection, il faut qu'il y ait un aléa lors du calcul mais il n'est pas nécessaire pas la dérive introduite par cet aléa croisse au cours des itérations.

Par rapport à l'exemple de la figure 1, un seul calcul d'exponentiation est donc désormais suffisant. Ce calcul faisant intervenir à chaque tour la division par la quantité aléatoire (bloc 25), donc une multiplication, le nombre total de multiplications est 3m pour parvenir au résultat. L'économie en termes de ressources est donc de 25 % par rapport à la solution de la figure 1.

Selon un mode particulier de réalisation, la quantité aléatoire r est sélectionnée pour correspondre à une puissance de 2 (r = 2^{k}). Cela permet d'effectuer en parallèle les étapes 25 et 53 si les étapes 25 et 53 sont exécutées par deux processeurs distincts. En effet, l'étape 25 revient à un décalage des bits et prend un peu de temps. Réaliser le test 53 pendant ce temps permet de compenser.
La figure 2A illustre un calcul similaire à celui de la figure 2, mais effectué de droite à gauche, c'est-à-dire du bit de poids faible vers le bit de poids fort (en décrémentant le rang i de l'exposant au lieu de l'incrémenter - bloc 61A, PREV i). Par rapport à l'exposé de la figure 2 _{:}
   - une (arbitrairement deuxième) variable U est initialisée (bloc 23, U = M.r) avec le produit de la quantité r par le message M - en variante, les calculs sur la variable U sont directement effectués dans la variable contenant le message M ;
   - les étapes 51 et 25 sont remplacées par des étapes de mise à jour similaires (bloc 71, U = U² et 75, U = U/r) de la variable U, reportées avant l'étape 60, après les opérations conditionnées par le test 53 ;
   - l'étape 54 est remplacée par une étape 54A (T = T.U) prenant en compte la variable U au lieu de la donnée M et, dans le cas d'une utilisation de la (arbitrairement troisième) variable T', une mise à jour factice similaire (bloc 54A', T' = T.U) est effectuée ; et
   - l'étape 54A est suivie d'une étape identique à l'étape 25 (bloc 25A, T = T/r) et, dans le cas d'une utilisation de la variable T', une mise à jour similaire (bloc 25A', T' = T/r) est effectuée après l'étape 54A'.
La figure 2B illustre une autre variante du mode de réalisation de la figure 2, dans lequel les bits de l'exposant ne sont pas traités un par un, mais par groupes (fenêtres) d'un nombre s de bits. La figure 2B illustre un exemple de fenêtres de 2 bits (s = 2).

Par rapport à la figure 2 :
- deux variables U1 et U2 sont pré-calculées (bloc 231, U1 = M² et bloc 232, U2 = M.U1) et contiennent respectivement le carré M² et le cube M³ de la donnée M - plus généralement, on pré-calcule s variables Uj (j étant compris entre 1 et s) contenant respectivement la valeur M^{j} ;
- l'étape 51 est remplacée par une étape (bloc 51B, T = T^{2s}) d'élévation à la puissance 2.s, soit T⁴ dans cet exemple ;
- l'étape 25 est remplacée par une étape (bloc 25B, T = T/r^{(s+1)}) de division de la variable T par une puissance s+1, soit 3 dans cet exemple, de la quantité aléatoire r ;
- le test 53 est remplacé par un test 531 (hi = 1 ?) de la valeur du premier bit (de poids faible) du groupe de bits et des tests 532 (hᵢ₊₁ = 1 ?) de la valeur du deuxième bit du groupe de bits - plus généralement on effectue une sélection de l'étape de mise à jour de la variable T qui suit en fonction de la valeur de la fenêtre de bits considérée (pour une fenêtre de deux bits, il faut un test 531 et deux tests 532, pour une fenêtre de trois bits, il faut un test 531, deux test 532 et quatre tests sur l'état du bit hᵢ₊₂, etc.) ;
- selon le résultat des tests 531 et 532, on met à jour la variable T avec : pour une paire de bits hi hᵢ₊₁ valant 11, le produit (bloc 542, T = T.U2) du contenu de la variable T par la variable U2, pour une paire valant 10, son produit (bloc 541, T = T.U1) par la variable U1, pour une paire valant 01, son produit (bloc 54, T = T.M) par la donnée M, et pour une paire valant 00, on met à jour la variable T' (étape 54') - plus généralement, la variable T est mise à jour par son produit par une puissance de la donnée M, fonction de la valeur décimale représentée par les valeurs de la fenêtre de bits considérée ; et
- l'étape 61 est remplacée par une étape 61B (i = i + s) incrémentant le rang de l'exposant de la taille s de la fenêtre de bits traités à chaque itération.

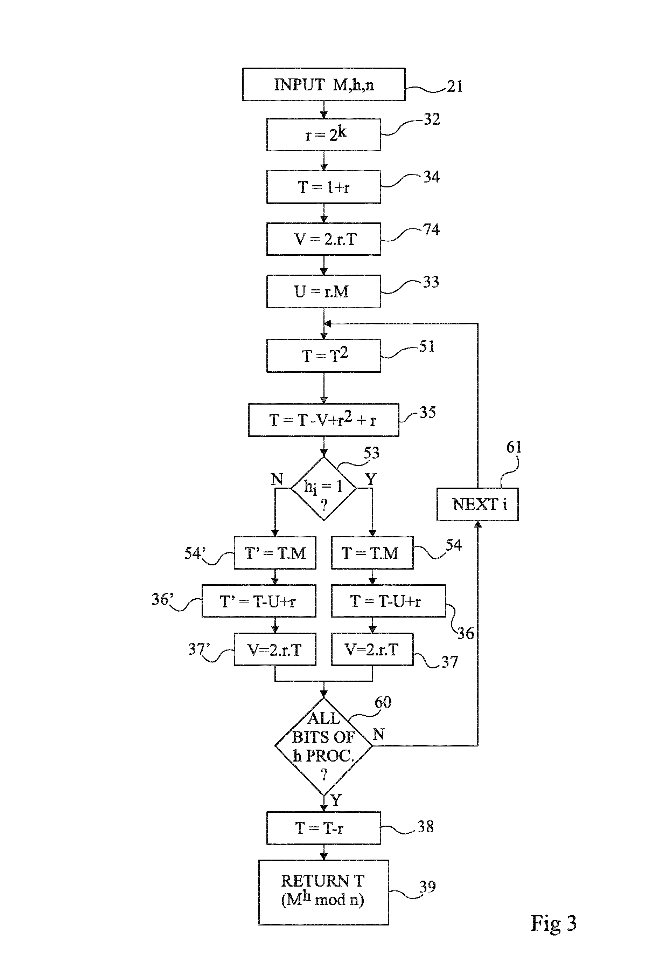

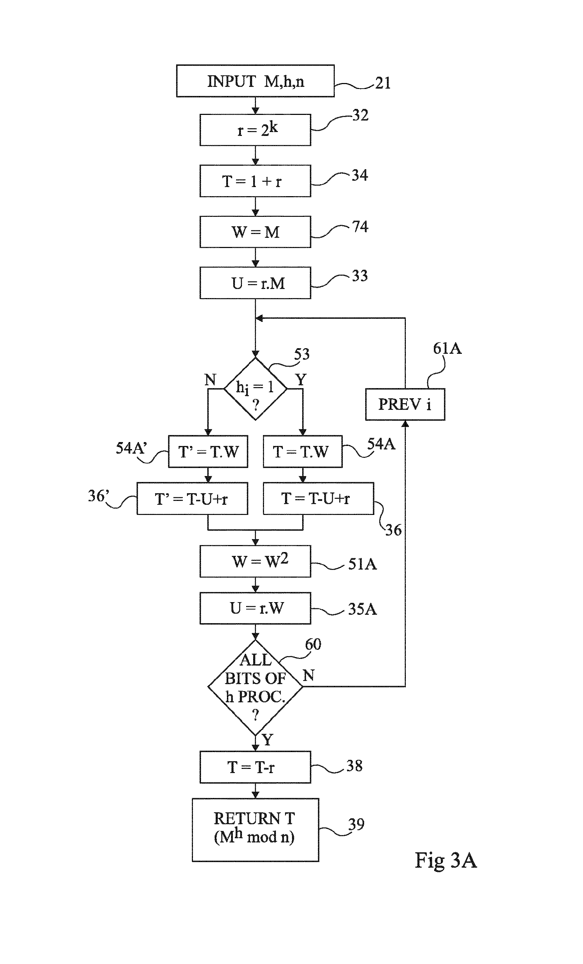

La figure 3 est un organigramme illustrant un autre mode de réalisation selon le premier aspect.

Comme dans le mode de réalisation de la figure 2, la cellule de calcul d'exponentiation modulaire reçoit (bloc 21) la donnée M à soumettre à l'exponentiation modulaire), l'exposant h et le modulo n. La figure 3 expose un calcul effectué de gauche à droite (en incrémentant le rang i du bit de l'exposant).

On commence (bloc 32, r = 2^{k}) par sélectionner un nombre aléatoire, de préférence mais non nécessairement, pour qu'il corresponde à une puissance de 2.

On initialise ensuite (bloc 34, T = 1+r ; bloc 74, V = 2.T.r et bloc 33 ; U = r.M) trois variables T (arbitrairement première), V, et U (arbitrairement deuxième), respectivement avec l'addition de l'unité (1) à la quantité r, le produit de cette valeur de la variable T par le double de la quantité r, et le produit des quantités r et M.

Puis, on effectue des itérations en boucle sur les différents bits hi de l'exposant. Pour chaque bit, on commence par (bloc 51, T = T²) élever au carré la variable T. Puis, on effectue une opération (bloc 35, T = T - V + r² + r) consistant à soustraire de la variable T issue de l'étape précédente la valeur de la variable V et à y ajouter le carré (pré-calculé) de la valeur r, et la valeur r.

On effectue alors le test 53 (hi = 1 ?) sur l'état du bit de l'exposant. Si celui-ci vaut 1 (sortie Y du bloc 53), la variable T est mise à jour (bloc 54, T = T.M) par le produit par la donnée M (arbitrairement troisième variable), mise à jour (bloc 36, T = T - U + r) en lui soustrayant le produit de la donnée M par la quantité aléatoire r (pré-calculé) et en lui ajoutant la quantité r, et le résultat est multiplié (bloc 37, V = 2.r.T) par le double de la quantité r (pré-calculé) et copié dans la variable V (arbitrairement quatrième variable). Dans le cas où le bit de l'exposant vaut 0 (sortie N du bloc 53), on effectue les mêmes opérations (blocs 54', T' = T.M, 36', T' = T - U + r, et 37, V = 2.r.T) en mettant à jour, pour les étapes 54' et 36', une variable T' (arbitrairement cinquième) qui n'est pas prise en compte dans le résultat, puis la variable V comme à l'étape 37 de l'autre branche. L'utilisation de la variable factice T' (étapes 54' et 36'), bien qu'optionnelle, est préférée.

A l'étape 35, l'opération réalisée consiste à éliminer la dérive introduite par le tour précédent tandis qu'aux étapes 36 et 37, on réintroduit cette dérive de façon à maintenir la protection.

Tant que tous les bits i de l'exposant h n'ont pas été traités (sortie N du bloc 60, ALL BITS OF h PROC. ?), on passe au bit suivant (bloc 61, NEXT i) et on revient en entrée du bloc 51.

Une fois que tous les bits ont été traités (sortie Y du bloc 60), on soustrait la quantité aléatoire r au résultat T (bloc 38, T = T-r). Le résultat obtenu (bloc 39, RETURN T) contient la valeur M^{h} mod n.

Un mode de réalisation consistant à additionner la quantité aléatoire comme décrit en relation avec la figure 3 ne requiert qu'un calcul d'exponentiation modulaire et minimise le nombre de multiplications sur des "grands" nombres (typiquement le message est d'au moins 2048 bits), couteuses en ressources, en le limitant à m (nombre de bits de l'exposant h) multiplications (blocs 54, 54'). Les multiplications par 2.r aux blocs 37 et 37' sont moins gênantes car elle concerne des multiplications par un "petit" nombre (par exemple 128 bits) par rapport à la taille du message. Effectuer des additions est en effet beaucoup plus simple que des multiplications. Pour une addition, il suffit d'utiliser, par exemple, des portes de type OU-Exclusif.

En outre, le mode de réalisation de la figure 3 permet d'effectuer en parallèle la multiplication du bloc 51 avec les termes variables du bloc 36, c'est-à-dire la multiplication de V.r. On gagne ainsi du temps.

Prendre en compte la quantité aléatoire dans les itérations (annuler la dérive liée au tour précédent) permet d'utiliser une addition plutôt qu'une multiplication.

La figure 3A illustre une variante dans laquelle le calcul est effectué de gauche à droite (en décrémentant le rang i du bit de l'exposant vers le bit de poids faible - bloc 61A, PREV i). Par rapport à l'exposé de la figure 3 :
- une (arbitrairement troisième) variable W est initialisée (bloc 74, W = M) avec la valeur de la donnée M - en variante, les calculs sur la variable W sont directement effectués dans la variable contenant le message M ;
- l'étape 51 est remplacée par une étape 51A de mise à jour similaire (W = W²) d'élévation au carrée de la valeur de la variable W, reportée avant l'étape 60, après les opérations conditionnées par le test 53 ;
- l'étape 54 est remplacée par une étape 54A (T = T.W) prenant en compte la variable W au lieu de la donnée M et, dans le cas d'une utilisation de la variable T', une mise à jour factice similaire (bloc 54A', T' = T.W) est effectuée ; et
- l'étape 35 est remplacée par une étape 35A (U = r.W), reportée entre les étapes 51A et 60, et dans laquelle la variable U est mise à jour par le produit du contenu de la variable W par la quantité aléatoire r.

Selon un deuxième aspect, on prévoit d'appliquer un principe similaire à celui de la figure 2 à un calcul sur des courbes elliptiques.

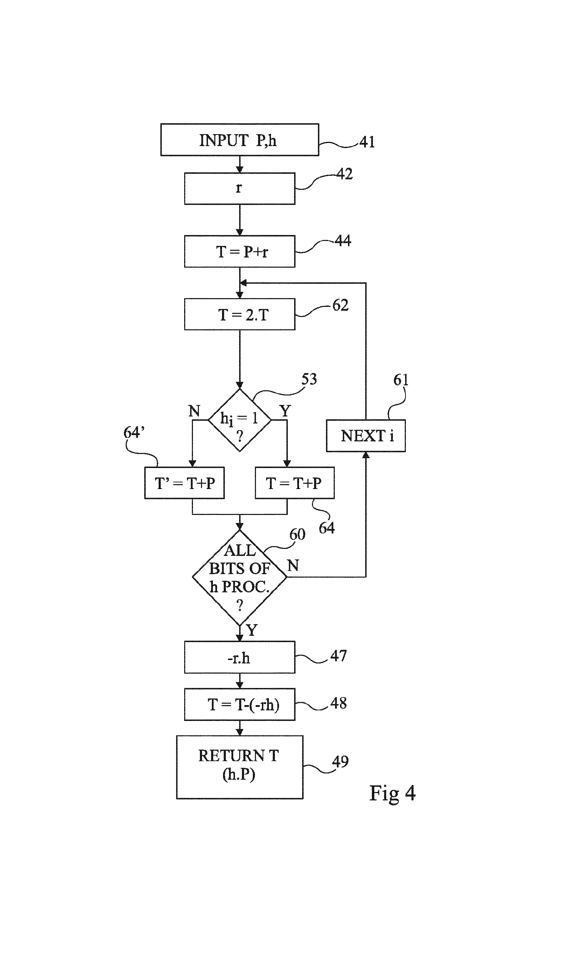

La figure 4 est un organigramme illustrant un exemple usuel de calcul sur une courbe elliptique.

L'objectif est de calculer un produit h.P où P représente l'équivalent du message à chiffrer et h une quantité secrète. Dans une application à la cryptographie sur les courbes elliptiques, le message correspond à un point P de la courbe et la quantité h à un entier par lequel est multiplié ce point. Dans une cryptographie asymétrique, cette quantité h n'est connue que d'une des deux parties. On cherche à calculer le produit P.h en protégeant la quantité h.

Pour cela, comme l'illustre la figure 4, la cellule de calcul reçoit (bloc 41, INPUT P, h) les grandeurs P et h à soumettre à l'algorithme.

Puis (bloc 42), une quantité aléatoire r est tirée ou sélectionnée et une variable T est initialisée (bloc 44, T = P + r) par l'addition de cette quantité r au point P de la courbe elliptique.

On entame alors une boucle itérative dans laquelle, pour chaque bit hi de la quantité secrète h, on commence par calculer (bloc 62, T = 2.T) le double de la quantité T. Ensuite, selon l'état du bit de la quantité secrète (bloc 53, hi = 1 ?), on effectue de façon similaire aux modes de réalisation du premier aspect, un calcul utile ou un calcul factice. Si le bit hi de la quantité h vaut 1 (sortie Y du bloc 53), la variable T est mise à jour par l'addition du point P (bloc 64, T = T + P). Dans le cas contraire (sortie N du bloc 53), on met à jour une variable T', inutile au résultat, par la même opération (bloc 64', T' = T + P). Là encore, ce calcul factice bien qu'optionnel est préférable et améliore la protection.

Tant que tous les bits de la quantité h n'ont pas été traités (sortie N du bloc 60, ALL BITS OF h PROC. ?), on passe au bit suivant (bloc 61, NEXT i) et on revient en entrée du bloc 62. Une fois que tous les bits ont été traités (sortie Y du bloc 60), on doit effectuer deux opérations, à savoir une multiplication (bloc 47, -r.h) de la quantité aléatoire par la clé h, puis une soustraction (bloc 48, T = T-(-r.h)) du résultat de cette multiplication du contenu de la variable T, pour éliminer la contribution de la quantité aléatoire r. On fournit enfin le résultat contenu dans la variable T (bloc 49, RETURN T). Ce résultat correspond à l'opération sur les courbes elliptiques, notée h.P.

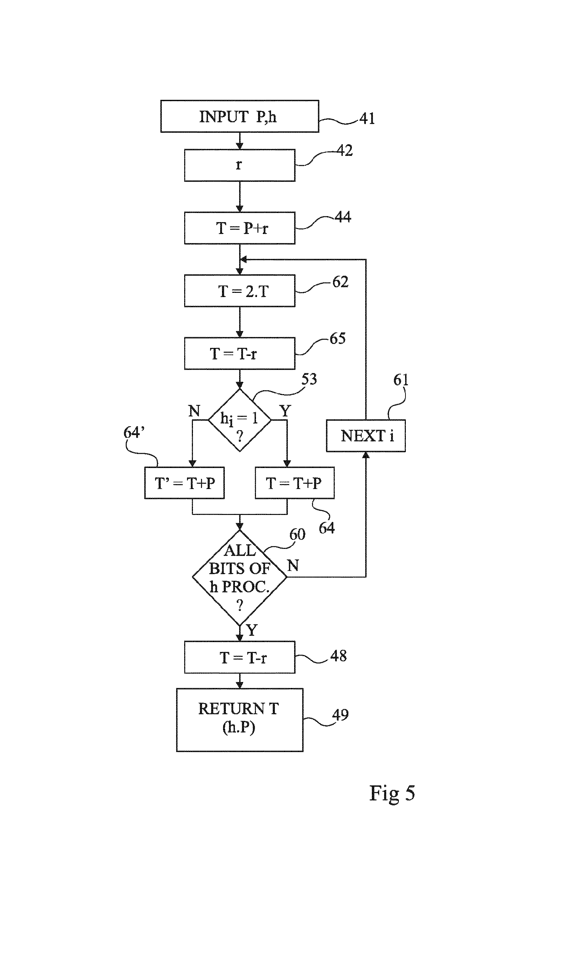

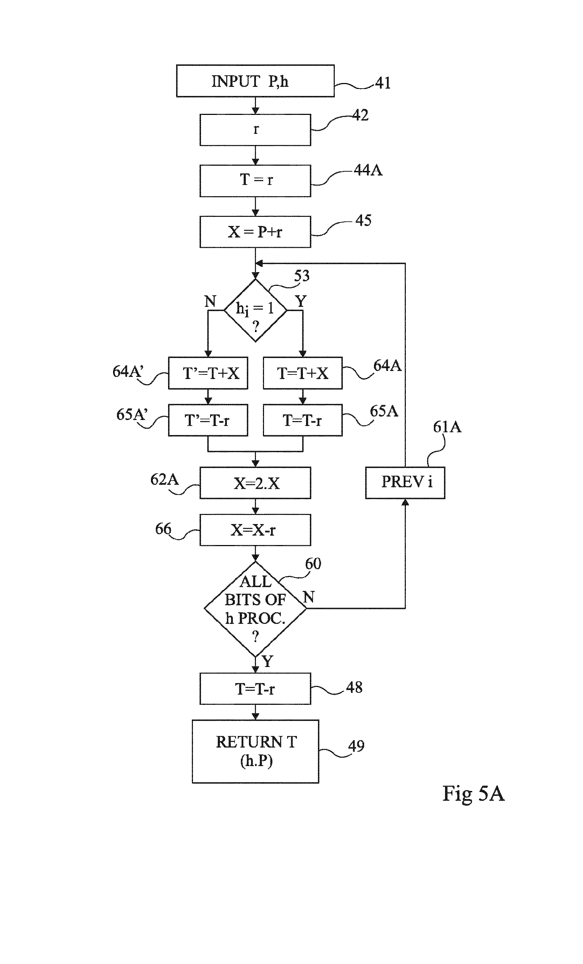

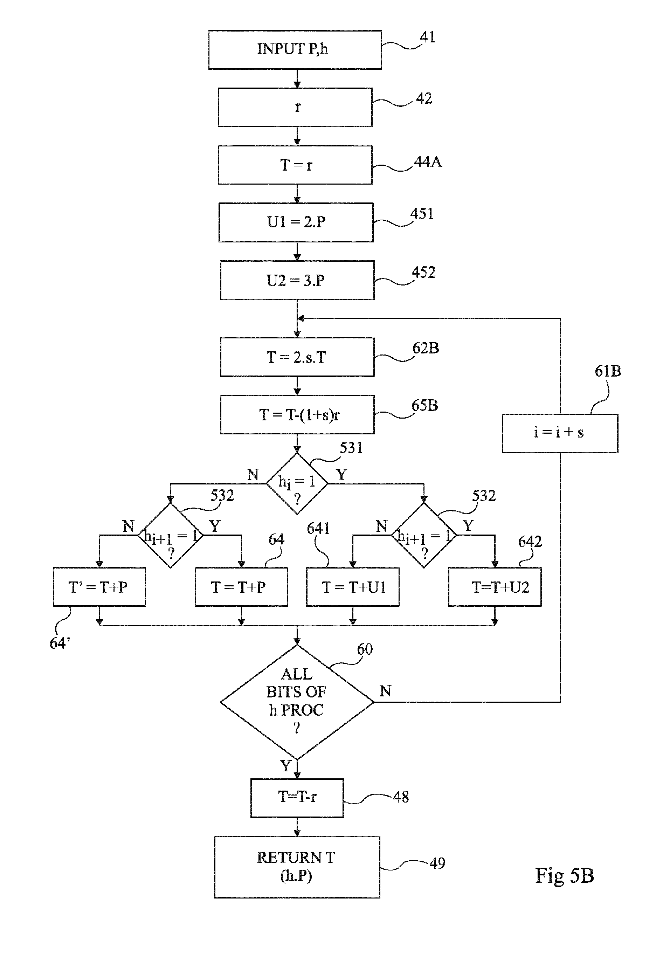

La figure 5 est un organigramme illustrant un mode de réalisation d'un calcul sur courbes elliptiques. La figure 5 expose un calcul effectué de gauche à droite (l'étape 61 correspond à incrémenter le rang i du bit de l'exposant vers le bit de poids fort).

L'objectif est là encode de calculer un produit h.P où P représente l'équivalent du message à chiffrer et h une quantité secrète.

Comme précédemment, la cellule de calcul reçoit (bloc 41, INPUT P, h) les grandeurs P et h à soumettre à l'algorithme.

Puis (bloc 42), une quantité aléatoire r est tirée ou sélectionnée et une variable T (arbitrairement première) est initialisée (bloc 44, T = P + r) par l'addition de cette quantité r au point P de la courbe elliptique.

On entame alors une boucle itérative dans laquelle, pour chaque bit hi de la quantité secrète h, on commence par calculer (bloc 62, T = 2.T) le double de la quantité T, puis (bloc 65, T = T - r) la variable T est mise à jour en lui soustrayant la quantité aléatoire r. Ensuite, selon l'état du bit de la quantité secrète (bloc 53, hi = 1 ?), on effectue de façon similaire aux modes de réalisation du premier aspect, un calcul utile ou un calcul factice. Si le bit hi de la quantité h vaut 1 (sortie Y du bloc 53), la variable T est mise à jour par l'addition du point P (bloc 64, T = T + P). Dans le cas contraire (sortie N du bloc 53), on met à jour une variable T', inutile au résultat, par la même opération (bloc 64', T' = T + P). Là encore, ce calcul factice bien qu'optionnel est préférable et améliore la protection.

Tant que tous les bits de la quantité h n'ont pas été traités (sortie N du bloc 60, ALL BITS OF h PROC. ?), on passe au bit suivant (bloc 61, NEXT i) et on revient en entrée du bloc 62. Une fois que tous les bits ont été traités (sortie Y du bloc 60), on effectue une dernière opération (bloc 48, T = T - r) pour éliminer la dernière contribution de la quantité aléatoire r et on fournit le résultat contenu dans la variable T (bloc 49, RETURN T). Ce résultat correspond à l'opération sur les courbes elliptiques, notée h.P.

Comme pour les autres aspects, faire intervenir la quantité aléatoire au niveau du calcul itératif et éliminer progressivement la dérive, simplifie les calculs et est moins gourmand en terme de ressources énergétiques et temporelles.

La figure 5A illustre une variante dans laquelle le calcul est effectué de gauche à droite (en décrémentant le rang i du bit de l'exposant vers le bit de poids faible - bloc 61A, PREV i). Par rapport à l'exposé de la figure 5 :
- la variable T est initialisée (bloc 44A) avec la quantité aléatoire r ;
- une variable X (arbitrairement deuxième) est initialisée (bloc 45, X = P + r) par la somme du point P et de la quantité aléatoire r - en variante, on utilise la variable P elle-même (P = P + r) ;
- les étapes 62 et 65 sont remplacées par des étapes de mise à jour similaires (X = 2.X et X = X - r) de la variable X, reportées avant l'étape 60, après les opérations conditionnées par le test 53 ; et
- l'étape 64 est modifiée en étape 64A (T = T + X) où la variable P est remplacée par la variable X et est suivie d'une étape 65A identique à l'étape 65 (T = T - r), et dans le cas d'une utilisation de la variable T', des opérations similaires (blocs 64A', T' = T + X et 65A', T' = T - r) sont effectuées sur celle-ci.

La figure 5B illustre une autre variante du mode de réalisation de la figure 5, dans lequel les bits de l'exposant ne sont pas traités un par un, mais par groupes (fenêtres) d'un nombre s de bits. La figure 5B illustre un exemple de fenêtres de 2 bits (s = 2).

Par rapport à la figure 5 .
- l'étape 44 est remplacée par l'étape 44A (figure 5A) ;
- deux variables U1 et U2 sont pré-calculées (bloc 451, U1 = 2.P et bloc 452, U2 = 3.P) et contiennent respectivement le double 2.P et le triple 3.P de la valeur du point P - plus généralement, on pré-calcule s variables Uj (j étant compris entre 1 et s) contenant respectivement la valeur (j+1).P ;
- l'étape 62 est remplacée par une étape (bloc 62B, T = 2.s.T) de multiplication par 2.s, soit 4 dans cet exemple ;
- l'étape 65 est remplacée par une étape (bloc 65B, T = T - (1+s).r) de soustraction du produit par 1+s, soit 3 dans cet exemple, de la quantité aléatoire r ;
- le test 53 est remplacé par un test 531 (hi = 1 ?) de la valeur du premier bit (de poids faible) du groupe de bits et des tests 532 (hᵢ₊₁ = 1 ?) de la valeur du deuxième bit du groupe de bits - plus généralement on effectue une sélection de l'étape de mise à jour de la variable T qui suit en fonction de la valeur de la fenêtre de bits considérée comme pour le mode de réalisation de la figure 2B ;
- selon le résultat des tests 531 et 532, on met à jour la variable T avec : pour une paire de bits hi ; hᵢ₊₁ valant 11, la somme (bloc 642, T = T + U2) du contenu de la variable T et de celui de la variable U2, pour une paire valant 10, sa somme (bloc 641, T = T + U1) par le contenu de la variable U1, pour une paire valant 01, son addition (bloc 64, T = T + P) au point P, et pour une paire valant 00, on met à jour la variable T' (étape 64') - plus généralement, la variable T est mise à jour en lui additionnant le point P un nombre de fois fonction de la valeur décimale représentée par les valeurs de la fenêtre de bits considérée ; et
- l'étape 61 est remplacée par une étape 61B (i = i + s) incrémentant le rang de l'exposant de la taille s de la fenêtre de bits traités à chaque itération.

Un avantage des modes de réalisation décrits qu'il s'agisse du premier ou second aspect est que la quantité secrète h n'est plus exposée directement à une éventuelle attaque.

Divers modes de réalisation ont été décrits. Diverses variantes et modifications apparaîtront à l'homme de l'art. En particulier, la mise en oeuvre des modes de réalisation décrits est à la portée de l'homme du métier à partir des indications fonctionnelles données ci-dessus et en utilisant des outils usuels. Le nombre d'éléments de mémorisation temporaire (registres et analogues) à utiliser dépend des possibilités du circuit de même que l'exécution de certaines opérations en parallèle. La taille des variables et des données dépend des algorithmes mis en oeuvre. De plus, bien que les modes de réalisation aient été décrits en faisant plus référence à un vocabulaire logiciel, la mise en oeuvre de ces modes de réalisation s'effectue, au moins au niveau de la cellule de calcul de l'opération d'exponentiation modulaire, de préférence sous forme matérielle en utilisant une même cellule de calcul. Les opérations de multiplication et de carré modulaire sont câblées et leur utilisation est contrôlée par un programme.

## Revendications

1. Procédé de protection d'un calcul, par un circuit électronique, d'une exponentiation modulaire d'une quantité numérique (M) dans lequel :
une première variable (T) est initialisée (34) avec une quantité aléatoire (r) majorée de l'unité ;
une deuxième variable (U) est initialisée (33) avec le produit de ladite quantité numérique par ladite quantité aléatoire ;
une troisième variable (M ; W) est initialisée (21 ; 74) avec ladite quantité numérique ;
itérativement pour tous les bits (hi) valant 1 d'un exposant (h) de l'exponentiation modulaire, la première variable est mise à jour en :
a) multipliant (54 ; 54A) son contenu par celui de la troisième variable ; et
b) lui soustrayant (36) le contenu de la deuxième variable majoré de la quantité aléatoire,
une fois tous les bits de l'exposant traités, le contenu de la première variable est minoré (38) de la quantité aléatoire pour fournir (39) le résultat de l'exponentiation modulaire.

2. Procédé selon la revendication 1, dans lequel les bits de l'exposant sont traités successivement (61) à partir du bit de poids faible, la troisième variable (M) contenant ladite quantité numérique.

3. Procédé selon la revendication 2, dans lequel, pour tous les bits de l'exposant :
la première variable (T) est mise à jour avant l'étape a) en :
élevant son contenu au carré (51) ; et
lui soustrayant (35) le contenu d'une quatrième variable (V) initialisée (74) avec le double du produit de la quantité aléatoire (r) par la valeur initiale de la première variable ; et
la quatrième variable est mise à jour (37, 37') par le double du produit du contenu de la première variable par la quantité aléatoire.

4. Procédé selon la revendication 1, dans lequel les bits de l'exposant sont traités successivement (61A) à partir du bit de poids fort, la troisième variable (W) étant initialisée avec ladite quantité numérique (M).

5. Procédé selon la revendication 4, dans lequel, pour chaque bit de l'exposant et après l'étape b) _{:}
le contenu de la troisième variable (W) est élevé au carré (51A) ; puis
la deuxième variable (U) est mise à jour par le produit du contenu de la troisième variable par la quantité aléatoire (r).

6. Procédé selon l'une quelconque des revendications 1 à 5, dans lequel si le bit courant de l'exposant vaut 0, une cinquième variable (T') est mise à jour par les opérations prévues aux étapes a) et b).

7. Procédé selon l'une quelconque des revendications 1 à 6, dans lequel la quantité aléatoire est une puissance de deux.

8. Procédé selon l'une quelconque des revendications 1 à 7, dans lequel ledit exposant (h) représente une quantité secrète.

9. Procédé de cryptographie selon un algorithme RSA dans lequel chaque exponentiation modulaire est calculée par la mise en oeuvre du procédé conformément à l'une quelconque des revendications 1 à 8.

10. Circuit électronique adapté à la mise en oeuvre du procédé conforme à l'une quelconque des revendications précédentes.
